# EUROPEAN PATENT SPECIFICATION

(11) **EP 3 537 673 B1**
(45) Date of publication and mention of the grant of the patent: **15.12.2021**
(21) Application number: 17867314.1
(22) Date of filing: 23.10.2017
(51) Int. Cl.: H04L 12/28

(54) **DATA SENDING AND RECEIVING METHOD AND DEVICE, ONU, AND OLT**
VERFAHREN UND VORRICHTUNG ZUM SENDEN UND EMPFANGEN VON DATEN, ONU UND OLT
PROCÉDÉ ET DISPOSITIF D'ENVOI ET DE RÉCEPTION DE DONNÉES, ONU, ET OLT

(30) Priority: 04.11.2016 CN 201610979482
(43) Date of publication of application: 11.09.2019
(73) Proprietor: ZTE Corporation, Shenzhen, Guangdong 518057 (CN)
(72) Inventor: GENG, Dan, Shenzhen Guangdong 518057 (CN); ZHANG, Weiliang, Shenzhen Guangdong 518057 (CN); YUAN, Liquan, Shenzhen Guangdong 518057 (CN); MA, Zhuang, Shenzhen Guangdong 518057 (CN); LI, Mingsheng, Shenzhen Guangdong 518057 (CN)
(74) Representative: Aipex B.V.
(86) International application number: PCT/CN2017/107296
(87) International publication number: WO 2018/082463

(56) References cited:
- EP-A1- 2 337 256
- WO-A1-2017/177550
- CN-A- 1 984 051
- CN-A- 101 742 368
- US-A1- 2007 140 288
- US-A1- 2013 177 313

## Description

### TECHNICAL FIELD

The present invention relates to the field of communications and, in particular, to a data transmission and receiving method and apparatus, an optical line terminal (OLT) and an optical network unit (ONU).

### BACKGROUND

With the development of network technologies, a large number of services such as voices, data and videos can be transmitted by using a network. Therefore, the demand for bandwidth is constantly increasing, and a passive optical network (PON) emerges to meet such demand.

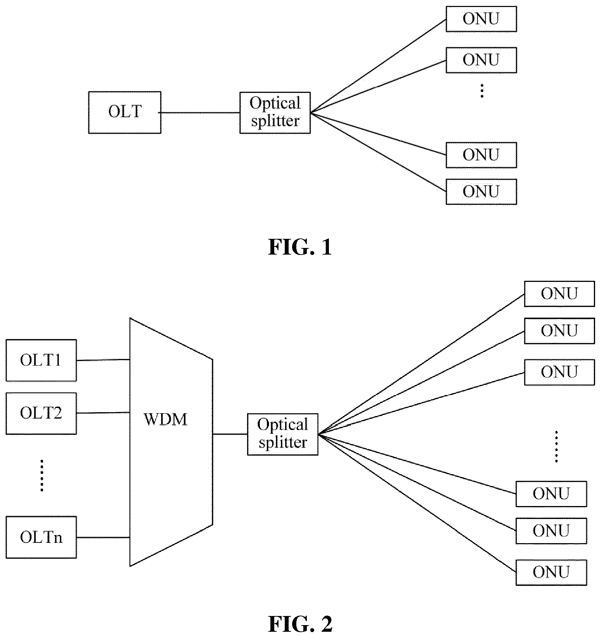

The topological structure of a PON system is shown in FIG. 1. The PON system is generally composed of an optical line terminal (OLT) on the office side, an optical network unit (ONU) on the user side, and an optical distribution network (ODN). The PON system generally has a point-to-multipoint network structure. The ODN is composed of a single-mode fiber and a passive optical device such as an optical splitter, an optical connector, and the like. The ODN provides an optical transmission medium for physical connection between the OLT and the ONU To improve the line rate in the case of saving optical fiber resources, a proposal has been raised that data can be transmitted simultaneously on multiple wavelengths in one optical fiber, and data of different ONUs on the same wavelength can be transmitted in the time-division-multiplexing mode in the downlink and in the time-division-multiplexing access mode in the uplink. This is referred to as a wavelength-division time-division PON system. FIG. 2 shows the topological structure of the PON system. As shown in FIG. 2, each OLT manages multiple groups of ONUs. For a group of ONUs on the same uplink wavelength and downlink wavelength, each of the group of ONUs transmits uplink data on the same uplink wavelength and receives downlink data on the same downlink wavelength. For groups of ONUs on different uplink wavelengths and downlink wavelengths, each group of the groups of ONUs transmit uplink data on different uplink wavelengths and receive downlink data on different downlink wavelengths.

To enable the ONU to transmit data at a rate exceeding a rate of data transmission on a single channel, a proposal has been raised that the ONU can transmit and receive data on multiple groups of wavelength channels simultaneously. However, in the existing art, the ONU reports data on only one channel to the OLT. Thus, in the case where the ONU supports data transmission on multiple groups of channels, no solution is provided in the existing art to solve the problem of how to set bandwidths for multiple channels as a whole. Further relevant technologies are also known from WO 2017/177550 A1 (ZTE CORP [CN]) 19 October 2017 (2017-10-19) & EP 3 429 102 A1 (ZTE CORP [CN]) 16 January 2019 (2019-01 -16), which relates to a PON architecture, a method for realizing data transmission with the PON architecture and an optical network device.

### SUMMARY

The features of the methods and apparatuses according to the present invention are defined in the independent claims. Further improvements are provided in the dependent claims. Embodiments of the present invention provide a data transmission and receiving method and apparatus, an OLT and an ONU to solve at least the problem of low data transmission efficiency that occurs because no solution of setting bandwidths for multiple channels as a whole is provided in the case where an ONU in a passive optical network supports data transmission on multiple channels in the existing art.

According to one embodiment of the present invention, provided is a data transmission method according to Claim 1.

In embodiments of the present invention, the ONU transmits the multiple pieces of fragmented data on the plurality of channels according to at least one of the following: starting time at which data transmission is started on each of the plurality of channels; and a numerical order of the plurality of channels.

In embodiments of the present invention, the transmitting, by the ONU, the multiple pieces of fragmented data to the OLT through the plurality of channels includes: in condition that the plurality of channels have channels having the same starting time, for the channels having the same starting time, transmitting the multiple pieces of fragmented data according to the numerical order of the channels having the same starting time.

According to the present invention, before the distributing, by the ONU, the multiple pieces of fragmented data to the plurality of channels according to the uplink bandwidths allocated to the plurality of channels by the OLT, the method further includes: sending, by the ONU, the total data amount of the to-be-transmitted data that needs to be transmitted on the plurality of channels to the OLT; and receiving, by the ONU, the uplink bandwidths allocated to the plurality of channels by the OLT according to the total data amount.

In embodiments of the present invention, each of the multiple pieces of fragmented data carries a serial number of the each of the multiple pieces of fragmented data, where the serial number of the each of the multiple pieces of fragmented data is used for indicating a transmission order of the each of the multiple pieces of fragmented data among the multiple pieces of fragmented data of the to-be-transmitted data.

In embodiments of the present invention, the serial number of the each of the multiple pieces of fragmented data is carried in a frame header of the each of the multiple pieces of fragmented data.

In embodiments of the present invention, the distributing, by the ONU, the multiple pieces of fragmented data to the plurality of channels according to the uplink bandwidths allocated to the plurality of channels by the OLT includes: dividing, by the ONU, the multiple pieces of fragmented data into groups of fragmented data according to a number of the plurality of channels, wherein each group of fragmented data correspond to one channel, where each group of fragmented data correspond to one channel; and transmitting the each group of fragmented data to a channel corresponding to the each group of fragmented data.

In embodiments of the present invention, for each group of fragmented data transmitted on the channel corresponding to the each group of fragmented data, a first-transmitted piece of fragmented data in the each group of fragmented data carries a serial number of the first-transmitted piece of fragmented data, where pieces of fragmented data in the each group of fragmented data are transmitted according to an order of serial numbers of the pieces of fragmented data, and a serial number of a piece of fragmented data in the each group of fragmented data is used for indicating a transmission order of the piece of fragmented data among the multiple pieces of fragmented data of the to-be-transmitted data.

According to another aspect of embodiments of the present invention, a data receiving method is provided in accordance with Claim 8.

According to the present invention, before the receiving, by the OLT, the multiple pieces of the fragmented data of the to-be-transmitted data transmitted by the ONU on the plurality of channels according to the uplink bandwidths, the method further includes: receiving, by the OLT, the total data amount transmitted by the ONU, and allocating, by the OLT, the uplink bandwidths to the plurality of channels according to the total data amount.

In embodiments of the present invention, each of the multiple pieces of fragmented data carries a serial number of the each of the multiple pieces of fragmented data, where the serial number of the each of the multiple pieces of fragmented data is used for indicating a transmission order of the each of the multiple pieces of fragmented data the multiple pieces of fragmented data of the to-be-transmitted data.

In embodiments of the present invention, the serial number of the piece of fragmented data is carried in a frame header of the each of the multiple pieces of fragmented data.

In embodiments of the present invention, the multiple pieces of fragmented data are transmitted in groups, wherein each group of fragmented data correspond to one channel.

In embodiments of the present invention, for each group of fragmented data received on the channel corresponding to the each group of fragmented data, a first-transmitted piece of fragmented data in the each group of fragmented data received on the channel corresponding to the each group of fragmented data carries a serial number of the first-transmitted piece of fragmented data, where pieces of fragmented data in the each group of fragmented data are transmitted according a numerical order of the pieces of fragmented data, and a serial number of a piece of fragmented data in the each group of fragmented data is used for indicating a transmission order of the piece of fragmented data among the multiple pieces of fragmented data of the to-be-transmitted data.

According to still another aspect of embodiments of the present invention, a data transmission apparatus is provided in accordance with Claim 12.

According to still another aspect of embodiments of the present invention, a data receiving apparatus is provided in accordance with Claim 13.

According to still another aspect of embodiments of the present invention, an optical network unit (ONU) is provided in accordance with Claim 14.

In embodiments of the present invention, the communication module transmits the multiple pieces of fragmented data on the plurality of channels according to at least one of the following: starting time at which data transmission is started on each of the plurality of channels; and a numerical order of the plurality of channels.

According to still another aspect of embodiments of the present invention, an optical line terminal (OLT) is provided in accordance with Claim 15.

According to the present invention, the communication module is configured to receive the total data amount transmitted by the ONU; and the processor is further configured to allocate the uplink bandwidths to the plurality of channels according to the total data amount.

According to still another aspect of embodiments of the present invention, not covered by the claims, a passive optical network (PON) system is provided. The system includes: an optical line terminal (OLT), an optical network unit (ONU) and an optical distribution network (ODN), where the OLT and the ONU perform data transmission through the ODN, where the OLT is configured to allocate uplink bandwidths to a plurality of channels according to the total data amount of to-be-transmitted data of the ONU; and to receive a multiple pieces of fragmented data of the to-be-transmitted data transmitted by the ONU; and the ONU is configured to slice the to-be-transmitted data into the multiple pieces of fragmented data; and to distribute the multiple pieces of fragmented data to the plurality of channels according to the uplink bandwidths and transmit the multiple pieces of fragmented data to the OLT through the plurality of channels.

According to embodiments of the present invention, an OLT can allocate, according to the total data amount of to-be-transmitted data, bandwidths to multiple channels bound to an ONU. This makes bandwidths set for the multiple channels as a whole according to the total data amount of the ONU, and thereby solves the problem of low data transmission efficiency that occurs because no solution of setting bandwidths for multiple channels as a whole is provided in the case where an ONU in a passive optical network supports data transmission on multiple channels.

### BRIEF DESCRIPTION OF DRAWINGS

The drawings described herein are used to provide a further understanding of the present invention, and form a part of the present application. The exemplary embodiments and the description thereof in the present invention are intended to explain the present invention and not to limit the present invention in an improper way. In the drawings:
FIG. 1 is a schematic diagram of a network architecture of a PON according to the existing art;
FIG. 2 is a schematic diagram of a network architecture of a time-division wavelength-division PON according to the existing art;
FIG. 3 is a block diagram illustrating a hardware structure of a terminal for implementing a data transmission method according to an embodiment of the present invention;
FIG. 4 is a flowchart of a data transmission method according to an embodiment of the present invention;
FIG. 5 is a block diagram illustrating a structure of a data transmission apparatus according to an embodiment of the present invention;
FIG. 6 is a flowchart of a data receiving method according to an embodiment of the present invention;
FIG. 7 is a block diagram illustrating a structure of a data receiving apparatus according to an embodiment of the present invention;
FIG. 8 is a schematic diagram of a frame format of uplink data according to an embodiment of the present invention; and
FIG. 9 is a schematic diagram of a frame format of downlink data according to an embodiment of the present invention.

### DETAILED DESCRIPTION

The present invention will be detailed below with reference to the accompanying drawings in conjunction with the embodiments. If not in collision, the embodiments described herein and the features thereof can be combined with each other.

It is to be noted that the terms "first", "second" and the like in the description, claims and drawings of the present invention are used to distinguish between similar objects and are not necessarily used to describe a particular order or sequence.

To enable the ONU to transmit data at a rate exceeding a rate of data transmission on a single channel, it is proposed that the ONU can transmit and receive data on multiple groups of wavelength channels simultaneously. In this architecture, it is urgent to solve the problem of how an ONU transmits data to an OLT over multiple wavelength channels and how the OLT combines received data into packets in the order in which the ONU transmits the data. A proposal has been raised in the existing art that the ONU transmits data packets on multiple channels in time order and the OLT combines received data into packets in time order in which the data is received on the channels. This requires that the multiple channels on which the ONU transmits data be strictly time-synchronized. If a delay jitter or the like occurs in data transmission, the time order in which the data is received is inconsistent with the time order in which the data is transmitted, resulting in a disorder of the received data. An improvement is to increase the difference in the start time of data transmission on different channels. However, this artificially causes a data transmission delay and reduces the data transmission efficiency. Solutions to the preceding problem are provided in embodiments of the present invention and described in detail below.

A passive optical network (PON) system is provided. The system includes: an optical line terminal (OLT), an optical network unit (ONU) and an optical distribution network (ODN), where the OLT and the ONU perform data transmission through the ODN, where the OLT is configured to allocate uplink bandwidths to a plurality of channels according to the total data amount of to-be-transmitted data of the ONU; and to receive multiple pieces of fragmented data of the to-be-transmitted data transmitted by the ONU; and the ONU is configured to perform fragmentation on the to-be-transmitted data to obtain the multiple pieces of fragmented data; and distribute the multiple pieces of fragmented data to the plurality of channels according to the uplink bandwidths and transmit the multiple pieces of fragmented data to the OLT through the plurality of channels. On the basis of the preceding system, the following solutions are provided in embodiments of the present invention:

### Embodiment one

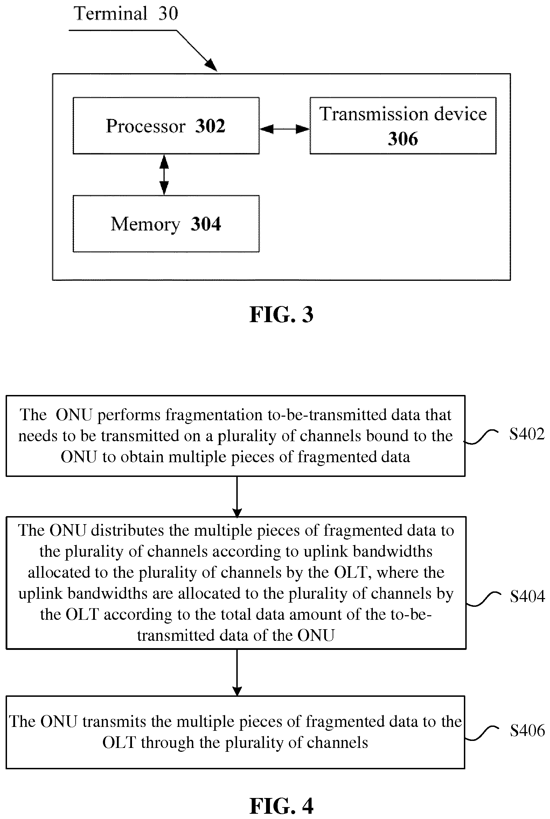

The method embodiment provided in embodiment one of the present application may be performed in a mobile terminal, a computer terminal or a similar computing device. Using running on a terminal as an example, FIG. 3 is a block diagram illustrating a hardware structure of a terminal for a data transmission method according to an embodiment of the present invention. As shown in FIG. 3, the terminal 30 may include one or more processors 302 (only one of which is shown in the figure) (the processor 302 may include, but is not limited to, a Microcontroller Unit (MCU) or a Field-Programmable Gate Array (FPGA)), a memory 304 for storing data, and a transmission device 306 for a communication function. It is to be understood by those skilled in the art that the structure shown in FIG. 3 is merely illustrative and not intended to limit the structure of the preceding electronic device. For example, the terminal 30 may further include more or fewer components than the components shown in FIG. 3, or may have a different configuration than the configuration shown in FIG. 3.

The memory 304 may be used for storing software programs and modules of application software, such as program instructions/modules corresponding to the data transmission method in embodiments of the present invention. The processor 302 executes the software programs and modules stored in the memory 304 to implement various functional applications and data processing, that is, implement the preceding method. The memory 304 may include a high-speed random access memory, and may also include a non-volatile memory such as one or more magnetic storage devices, flash memories, or other non-volatile solid state memories. In some examples, the memory 304 may further include memories disposed remote from the processor 302. These remote memories may be connected to the terminal 30 via a network. Examples of the preceding network include, but are not limited to, the Internet, an intranet, a local area network, a mobile communication network and a combination thereof.

The transmission device 306 is configured to receive or transmit data via a network. Examples of the preceding network may include a wireless network provided by a communication provider of the terminal 30. In one example, the transmission device 306 includes a Network Interface Controller (NIC) that can be connected to other network devices through a base station to communicate with the Internet. In one example, the transmission device 306 may be a Radio Frequency (RF) module for communicating with the Internet wirelessly.

The ONU or the OLT in this embodiment may adopt, but is not limited to, the configuration of the terminal shown in FIG. 3.

FIG. 4 is a flowchart of a data transmission method according to an embodiment of the present invention. As shown in FIG. 4, the method includes the steps described below.

In step S402, the ONU performs fragmentation to-be-transmitted data that needs to be transmitted on a plurality of channels bound to the ONU to obtain multiple pieces of fragmented data.

In step S404, the ONU distributes the multiple pieces of fragmented data to the plurality of channels according to uplink bandwidths allocated to the plurality of channels by the OLT, where the uplink bandwidths are allocated to the plurality of channels by the OLT according to the total data amount of the to-be-transmitted data of the ONU

In step S406, the ONU transmits the multiple pieces of fragmented data to the OLT through the plurality of channels.

In this embodiment of the present invention, the ONU transmits the multiple pieces of fragmented data on the plurality of channels according to at least one of the following: starting time at which data transmission is started on each of the plurality of channels; and a numerical order of the plurality of channels. That is, the ONU may transmit the fragmented data according to the order of the starting time or according to the numerical order of the channels. For example, in condition that the plurality of channels are four channels A, B, C and D, and the starting time of the four channels A, B, C and D is a, b, c and d respectively, where a < b < c < d, then the fragmented data are first distributed to channel A; when the uplink bandwidth requirement of channel A is met, the remaining fragmented data are distributed to channel B; and so on.

Channels may be allocated to the fragmented data in the order of starting time. However, a disorder occurs if a case where one or more channels have the same starting time exists. To solve this problem, in an optional embodiment, in condition that the plurality of channels have channels having the same starting time, for the channels having the same starting time, the multiple pieces of fragmented data are transmitted according to the numerical order of the channels having the same starting time.

In this embodiment of the present invention, before the ONU distributes the multiple pieces of fragmented data to the plurality of channels according to the uplink bandwidths allocated to the plurality of channels by the OLT, the ONU sends the OLT the total data amount of the to-be-transmitted data that needs to be transmitted on the plurality of channels; and the ONU receives the uplink bandwidths allocated to the plurality of channels by the OLT according to the total data amount.

In this embodiment of the present invention, each of the multiple pieces of fragmented data carries a serial number of each of the multiple pieces of fragmented data, where the serial number of the each of the multiple pieces of fragmented data is used for indicating a transmission order of the each of the multiple pieces of fragmented data among the multiple pieces of fragmented data of the to-be-transmitted data. In this way, the OLT can restore the multiple pieces of fragmented data according to the serial number.

In this embodiment of the present invention, the serial number of the each of the multiple pieces of fragmented data is carried in a frame header of the each of the multiple pieces of fragmented data.

In this embodiment of the present invention, the distributing, by the ONU, the multiple pieces of fragmented data to the plurality of channels according to the uplink bandwidths allocated to the plurality of channels by the OLT includes: classifying, by the ONU, the multiple pieces of fragmented data into groups according to a number of the plurality of channels, wherein each group of fragmented data correspond to one channel; and transmitting the each group of fragmented data to a channel corresponding to the each group of fragmented data.

In this embodiment of the present invention, for each group of fragmented data transmitted on the channel corresponding to the each group of fragmented data, a first-transmitted piece of fragmented data among the each group of fragmented data transmitted on the channel corresponding to the each group of fragmented data carries a serial number of the first-transmitted piece of fragmented data, where pieces of fragmented data in the each group of fragmented data are transmitted according to an order of serial numbers of the pieces of fragmented data, and a serial number of a piece of fragmented data in the each group of fragmented data is used for indicating a transmission order of the piece of fragmented data among the multiple pieces of fragmented data of the to-be-transmitted data.

From the description of the preceding implementations, it will be apparent to those skilled in the art that the method of the preceding embodiment may be implemented by use of software plus a necessary general-purpose hardware platform, or may, of course, be implemented by hardware, but in many cases, the former is a preferred implementation. Based on this understanding, the solution provided in the present invention substantially, or the part contributing to the existing art, may be embodied in the form of a software product. The software product is stored in a storage medium (such as a ROM/RAM, a magnetic disk or an optical disk) and includes several instructions for enabling a terminal (which may be a mobile phone, a computer, a server or a network device) to perform the method according to each embodiment of the present invention.

### Embodiment two

A data transmission apparatus is provided in this embodiment. The apparatus is used for implementing the preceding embodiment and optional implementations. What has been described will not be repeated. As used below, the term "module" may be software, hardware or a combination thereof capable of implementing preset functions. The apparatus in the embodiment described below is preferably implemented by software, but implementation by hardware or by a combination of software and hardware is also possible and conceived.

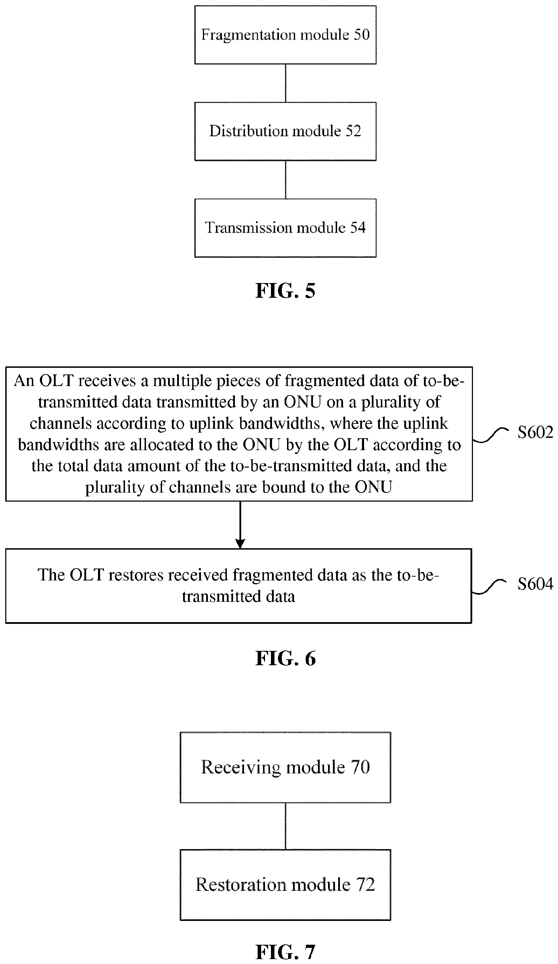

FIG. 5 is a block diagram illustrating a structure of a data transmission apparatus according to an embodiment of the present invention. As shown in FIG. 5, the apparatus includes:
a fragmentation module 50, which is configured to perform fragmentation on to-be-transmitted data that needs to be transmitted on a plurality of channels bound to the ONU to obtain a multiple pieces of fragmented data;
a distribution module 52, which is configured to distribute the multiple pieces of fragmented data to the plurality of channels according to uplink bandwidths allocated to the plurality of channels by an optical line terminal (OLT), wherein the uplink bandwidths are allocated to the plurality of channels by the OLT according to a total data amount of the to-be-transmitted data of the ONU; and
a transmission module 54, which is configured to transmit the multiple pieces of fragmented data to the OLT through the plurality of channels.

It is to be noted that the various modules described above may be implemented by software or hardware. Implementation by hardware may, but may not necessarily, be performed by the following method: the various modules described above are located in a same processor; or, in any combination, the various modules are located in different processors.

### Embodiment three

A data receiving method is provided in this embodiment of the present invention. The method includes the steps described below.

An optical line terminal (OLT) receives a multiple pieces of fragmented data of to-be-transmitted data transmitted by an optical network unit (ONU) on a plurality of channels according to uplink bandwidths, where the uplink bandwidths are allocated to the ONU by the OLT according to the total data amount of the to-be-transmitted data, and the plurality of channels are bound to the ONU

In this embodiment of the present invention, before the OLT receives the multiple pieces of fragmented data of the to-be-transmitted data transmitted by the ONU on the plurality of channels according to the uplink bandwidths, the OLT receives the total data amount transmitted by the ONU, and allocates the uplink bandwidths to the plurality of channels according to the total data amount.

In this embodiment of the present invention, each of the multiple pieces of fragmented data carries a serial number of a data slice, where the serial number of the each of the multiple pieces of fragmented data is used for indicating a transmission order of the each of the multiple pieces of fragmented data among the multiple pieces of fragmented data of the to-be-transmitted data.

In this embodiment of the present invention, the serial number of the each of the multiple pieces of fragmented data is carried in a frame header of the each of the multiple pieces of fragmented data.

In step S604, the OLT restores received fragmented data to the to-be-transmitted data.

In this embodiment of the present invention, the multiple pieces of fragmented data are transmitted in groups, where each group of fragmented data correspond to one channel.

In this embodiment of the present invention, for each group of fragmented data transmitted on the channel corresponding to the each group of fragmented data, a first-transmitted piece of fragmented data among the each group of fragmented data received on the channel corresponding to the each group of fragmented data carries a serial number of the first-transmitted piece of fragmented data, where pieces of fragmented data in the each group of fragmented data are transmitted according to an order of serial numbers of the pieces of fragmented data, and a serial number of a piece of fragmented data in the each group of fragmented data is used for indicating a transmission order of the piece of fragmented data among the multiple pieces of fragmented data of the to-be-transmitted data.

### Embodiment four

A data receiving apparatus is provided in this embodiment of the present invention. The apparatus is applied to an OLT. As shown in FIG. 7, the apparatus includes:
a receiving module 70, which is configured to receive a multiple pieces of fragmented data of to-be-transmitted data transmitted by an optical network unit (ONU) on a plurality of channels according to uplink bandwidths, where the uplink bandwidths are allocated to the ONU by the OLT according to the total data amount of the to-be-transmitted data, and the plurality of channels are bound to the ONU; and
a restoration module 72, which is connected to the receiving module 70 and configured to restore received fragmented data to the to-be-transmitted data.

It is to be noted that the various modules described above may be implemented by software or hardware. Implementation by hardware may, but may not necessarily, be performed by the following method: the various modules described above are located in a same processor; or, in any combination, the various modules are located in different processors.

### Embodiment five

An optical network unit (ONU) is provided in this embodiment of the present invention. The ONU includes: a processor, which is configured to perform fragmentation on to-be-transmitted data that needs to be transmitted on a plurality of channels bound to the ONU to obtain a multiple pieces of fragmented data; and to distribute the multiple pieces of fragmented data to the plurality of channels according to uplink bandwidths allocated to the plurality of channels by an optical line terminal (OLT), where the uplink bandwidths are allocated to the plurality of channels by the OLT according to the total data amount of the to-be-transmitted data of the ONU; and a communication module, which is configured to transmit the multiple pieces of fragmented data to the OLT through the plurality of channels. In this embodiment of the present invention, the communication module transmits the multiple pieces of fragmented data on the plurality of channels according to at least one of the following: starting time at which data transmission is started on each of the plurality of channels; and a numerical order of the plurality of channels.

An optical line terminal (OLT) is provided in this embodiment of the present invention. The OLT includes: a communication module, which is configured to receive multiple pieces of fragmented data of to-be-transmitted data transmitted by an optical network unit (ONU) on a plurality of channels according to uplink bandwidths, where the uplink bandwidths are allocated to the ONU by the OLT according to the total data amount of the to-be-transmitted data, and the plurality of channels are bound to the ONU; and a processor, which is configured to restore received fragmented data to the to-be-transmitted data. In this embodiment of the present invention, the communication module is configured to receive the total data amount transmitted by the ONU; and the processor is further configured to allocate the uplink bandwidths to the plurality of channels according to the total data amount.

### Embodiment six

In this embodiment, the OLT includes multiple ports. Each port corresponds to one wavelength channel. Each channel uses one downlink wavelength and one uplink wavelength. On each channel, one OLT port is used to manage a group of ONUs. This group of ONUs transmit uplink data in a time-division-multiplexing access mode. Different groups of ONUs on different wavelength channels transmit data in a wavelength-division multiplexing mode. One ONU may allow multiple wavelength channels to transmit and receive data simultaneously. The OLT and the ONU transmit and receive data using the steps described below.

In step 1, the ONU starts the optical receivers on all the wavelength channels supported by the ONU itself and receives the registered bandwidth allocations on all the channels described above. After receiving the registered bandwidth allocation on a certain channel, the ONU starts the corresponding optical transmitter on this channel and transmits a serial number to the OLT to complete registration on this channel. The ONU completes, according to the preceding method, registration on all the channels supported by the ONU itself. The ONU transmits the same serial number to the OLT on all channels.

In step 2, the OLT receives, on multiple channels, registration information transmitted by one ONU, where all the registration information includes the same serial number, and the OLT determines that the channels of the ONU are bound to the ONU, where the bound channels are all the channels that receive the registration information.

In step 3, the ONU reports the total data amount that is stored in the local buffer of the ONU and to be transmitted to the OLT to the OLT.

In step 4, after receiving the buffered data amount reported by the ONU in step 3, the OLT allocates uplink bandwidths to all channels bound to the ONU

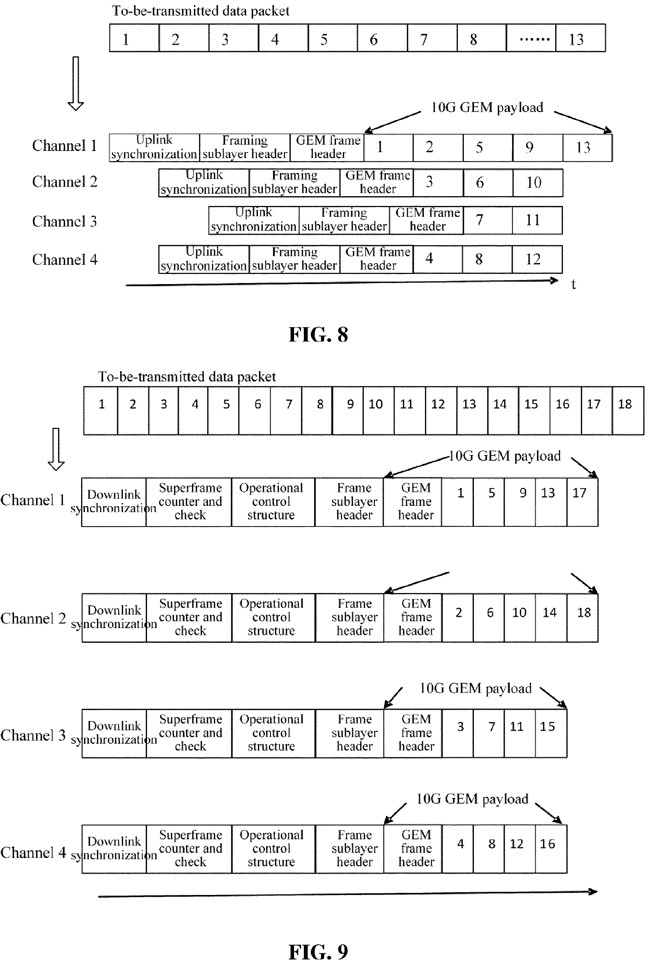

In step 5, the ONU performs fragmentation on the data in the buffer according to the size of the uplink bandwidth allocated by the OLT on each bound channel and then distributes the fragmented data to the channels. As shown in FIG. 8, for example, the ONU divides the data transmitted to the OLT into 13 data packets, and the fragmented data are transmitted according to the order of uplink transmission time on the channels. The first and second data packets are transmitted on the first channel. The third data packet is transmitted on the second channel. The fourth data packet is transmitted on the fourth channel. The data is transmitted according to the numerical order of channels on channels on which the uplink transmission time is the same. As shown in FIG. 8, for example, the fifth data packet is transmitted on the first channel, the sixth data packet is transmitted on the second channel, the seventh data packet is transmitted on the third channel, the eighth data packet is transmitted on the fourth channel, the ninth data packet is transmitted on the first channel, the tenth data packet is transmitted on the second channel, the eleventh data packet is transmitted on the third channel, the twelfth data packet is transmitted on the fourth channel, and the thirteenth data packet is transmitted on the first channel. The bound data is fragmented, distributed to different channels, and then transmitted. Each piece of the fragmented data is carried in the payload of a Gigabit Passive Optical Network (G-PON) Encapsulation Mode (GEM) frame. A GEM frame header carries the serial number of the first data slice transmitted on the current channel. This serial number indicates a transmission order of this piece of fragmented data among all fragmented data transmitted to the OLT by the ONU

In step 6, after receiving data on multiple bound channels supported by the ONU, the OLT grouping, according to the serial number of the first piece of fragmented data carried in the GEM frame header, multiple data packets on the multiple bound channels according to an order of serial numbers.

The data transmission and receiving method in this embodiment are also applicable to data transmitted to the ONU by the OLT. As shown in FIG. 9, the OLT slices the data and then distributes the data to multiple channels. As shown in FIG. 9. for example, the first data packet is transmitted on the first channel, the second data packet is transmitted on the second channel, the third data packet is transmitted on the third channel, the fourth data packet is transmitted on the fourth channel, the fifth data packet is transmitted on the first channel, the sixth data packet is transmitted on the second channel, the seventh data packet is transmitted on the third channel, the eighth data packet is transmitted on the fourth channel, the ninth data packet is transmitted on the first channel, the tenth data packet is transmitted on the second channel, the eleventh data packet is transmitted on the third channel, the twelfth data packet is transmitted on the fourth channel, the thirteenth data packet is transmitted on the first channel, the fourteenth data packet is transmitted on the second channel, the fifteenth data packet is transmitted on the third channel, the sixteenth data packet is transmitted on the fourth channel, the seventeenth data packet is transmitted on the first channel, and the eighteenth data packet is transmitted on the second channel. The bound data is fragmented, distributed to different channels, and then transmitted. Each data slice is carried in the payload of a Gigabit Passive Optical Network (G-PON) Encapsulation Mode (GEM) frame. A GEM frame header carries the serial number of the first data slice transmitted on the current channel. This serial number indicates a transmission order of this piece of fragmented data among all fragmented data transmitted to the ONU by the OLT. The size of each piece of fragmented data is a fixed number of bytes, such as 4 bytes, 8 bytes, 16 bytes, or the like. After the ONU receives data on multiple supported bound channels, the ONU groups, according to the serial number of the first piece of fragmented data carried in the GEM frame header, multiple data packets on the multiple bound channels according to an order of serial numbers.

### Embodiment seven

Another storage medium is provided in this embodiment of the present invention. Optionally, in this embodiment, the storage medium may be configured to store program codes for performing the following steps: performing, by an optical network unit (ONU) fragmentation on to-be-transmitted data that needs to be transmitted on a plurality of channels bound to the ONU to obtain a multiple pieces of fragmented data; distributing, by the ONU, the multiple pieces of fragmented data to the plurality of channels according to uplink bandwidths allocated to the plurality of channels by an optical line terminal (OLT), where the uplink bandwidths are allocated to the plurality of channels by the OLT according to the total data amount of the to-be-transmitted data of the ONU; and transmitting, by the ONU, the multiple pieces of fragmented data to the OLT through the plurality of channels.

### Embodiment eight

Another storage medium is provided in this embodiment. The storage medium is configured to store program codes for performing the following steps: receiving, by an optical line terminal (OLT), multiple pieces of fragmented data of to-be-transmitted data transmitted by an optical network unit (ONU) on a plurality of channels according to uplink bandwidths, where the uplink bandwidths are allocated to the ONU by the OLT according to the total data amount of the to-be-transmitted data, and the plurality of channels are bound to the ONU; and restoring, by the OLT, received fragmented data to the to-be-transmitted data.

Optionally, in this embodiment, the storage medium may include, but are not limited to, a U disk, a read-only memory (ROM), a random access memory (RAM), a mobile hard disk, a magnetic disk, an optical disk or another medium capable of storing program codes.

Optionally, for specific examples in this embodiment, reference may be made to the examples described in the preceding embodiments and optional implementations, and the specific examples will not be repeated in this embodiment.

Apparently, those skilled in the art should know that each preceding module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

### INDUSTRIAL APPLICABILITY

According to the solutions provided in embodiments of the present invention, an OLT can allocate, according to the total data amount of to-be-transmitted data, bandwidths to multiple channels bound to an ONU. This makes bandwidths set for the multiple channels as a whole according to the total data amount of the ONU, and thereby solves the problem of low data transmission efficiency that occurs because no solution of setting bandwidths for multiple channels as a whole is provided in the case where an ONU in a passive optical network supports data transmission on multiple channels.

## Claims

1. A data transmission method, **characterized by** comprising:
performing (S402), by an optical network unit, ONU, fragmentation on to-be-transmitted data that needs to be transmitted on a plurality of channels bound to the ONU to obtain multiple pieces of fragmented data;
distributing (S404), by the ONU, the multiple pieces of fragmented data to the plurality of channels according to uplink bandwidths allocated to the plurality of channels by an optical line terminal, OLT, wherein the uplink bandwidths are allocated to the plurality of channels by the OLT according to a total data amount of the to-be-transmitted data of the ONU; and
transmitting (S406), by the ONU, the multiple pieces of fragmented data to the OLT through the plurality of channels;
wherein before the distributing (S404), by the ONU, the multiple pieces of fragmented data to the plurality of channels according to the uplink bandwidths allocated to the plurality of channels by the OLT, the method further comprises:
sending, by the ONU, the total data amount of the to-be-transmitted data that needs to be transmitted on the plurality of channels to the OLT; and
receiving, by the ONU, the uplink bandwidths allocated to the plurality of channels by the OLT according to the total data amount.

2. The method of claim 1, wherein the ONU transmits the multiple pieces of fragmented data on the plurality of channels according to at least one of the following: starting time at which data transmission is started on each of the plurality of channels; and a numerical order of the plurality of channels.

3. The method of claim 2, wherein the transmitting, by the ONU, the multiple pieces of fragmented data to the OLT through the plurality of channels comprises: in condition that the plurality of channels have channels having the same starting time, for the channels having the same starting time, transmitting the multiple pieces of fragmented data according to the numerical order of the channels having the same starting time.

4. The method of any one of claims 1 to 3, wherein each of the multiple pieces of fragmented data carries a serial number of the each of the multiple pieces of fragmented data, wherein the serial number of the each of the multiple pieces of fragmented data is used for indicating a transmission order of the each of the multiple pieces of fragmented data among the multiple pieces of fragmented data of the to-be-transmitted data.

5. The method of claim 4, wherein the serial number of the each of the multiple pieces of fragmented data is carried in a frame header of the each of the multiple pieces of fragmented data.

6. The method of any one of claims 1 to 3, wherein the distributing, by the ONU, the multiple pieces of fragmented data to the plurality of channels according to the uplink bandwidths allocated to the plurality of channels by the OLT comprises:
dividing, by the ONU, the multiple pieces of fragmented data into groups of fragmented data according to a number of the plurality of channels, wherein each group of fragmented data correspond to one channel; and
transmitting the each group of fragmented data to a channel corresponding to the each group of fragmented data.

7. The method of claim 6, wherein for each group of fragmented data transmitted on the channel corresponding to the each group of fragmented data, a first-transmitted piece of fragmented data in the each group of fragmented data carries a serial number of the first-transmitted piece of fragmented data, wherein pieces of fragmented data in the each group of fragmented data are transmitted according to an order of serial numbers of the pieces of fragmented data, and a serial number of a piece of fragmented data in the each group of the fragmented data is used for indicating a transmission order of the piece of fragmented data among the multiple pieces of fragmented data of the to-be-transmitted data.

8. A data receiving method, **characterized by** comprising:
receiving (S602), by an optical line terminal, OLT, multiple pieces of fragmented data of to-be-transmitted data transmitted by an optical network unit, ONU, on a plurality of channels according to uplink bandwidths, wherein the plurality of channels are bound to the ONU; and
restoring (S604), by the OLT, the received pieces of fragmented data as the to-be-transmitted data;
wherein before the receiving (S602), by the OLT, the multiple pieces of fragmented data of the to-be-transmitted data transmitted by the ONU on the plurality of channels according to the uplink bandwidths, the method further comprises:
receiving, by the OLT, a total data amount transmitted by the ONU, and allocating, by the OLT, the uplink bandwidths to the plurality of channels according to the total data amount.

9. The method of claim 8, wherein each of the multiple pieces of fragmented data carries a serial number of the each of the multiple pieces of fragmented data, wherein the serial number of the each of the multiple pieces of fragmented data is used for indicating a transmission order of the each of the multiple pieces of fragmented data among the multiple pieces of fragmented data of the to-be-transmitted data;
wherein the serial number of the each of the multiple pieces of fragmented data is carried in a frame header of the each of the multiple pieces of fragmented data.

10. The method of claim 8, wherein the multiple pieces of fragmented data are transmitted in groups of fragmented data, wherein each group of fragmented data correspond to one channel.

11. The method of claim 10, wherein for each group of fragmented data transmitted on the channel corresponding to the each group of fragmented data, a first-transmitted piece of fragmented data in the each group of fragmented data carries a serial number of the first-transmitted piece of fragmented data, wherein pieces of fragmented data in the each group of fragmented data are transmitted according to an order of serial numbers of the pieces of fragmented data, and a serial number of a piece of fragmented data in the each group of fragmented data is used for indicating a transmission order of the piece of fragmented data among the multiple pieces of fragmented data of the to-be-transmitted data.

12. A data transmission apparatus, applied to an optical network unit, ONU, **characterized by** comprising:
a fragmentation module (50), which is configured to perform fragmentation on to-be-transmitted data that needs to be transmitted on a plurality of channels bound to the ONU to obtain multiple pieces of fragmented data;
a distribution module (52), which is configured to distribute the multiple pieces of fragmented data to the plurality of channels according to uplink bandwidths allocated to the plurality of channels by an optical line terminal, OLT, wherein the uplink bandwidths are allocated to the plurality of channels by the OLT according to a total data amount of the to-be-transmitted data of the ONU; and
a transmission module (54), which is configured to transmit the multiple pieces of fragmented data to the OLT through the plurality of channels;
wherein the transmission module (54) is further configured to send the total data amount of the to-be-transmitted data that needs to be transmitted on the plurality of channels to the OLT, and receive the uplink bandwidths allocated to the plurality of channels by the OLT according to the total data amount.

13. A data receiving apparatus, applied to an optical line terminal, OLT, **characterized by** comprising:
a receiving module (70), which is configured to receive multiple pieces of fragmented data of to-be-transmitted data transmitted by an optical network unit, ONU, on a plurality of channels according to uplink bandwidths, wherein the plurality of channels are bound to the ONU; and
a restoration module (72), which is configured to restore the received pieces of fragmented data as the to-be-transmitted data;
wherein the receiving module (70) is further configured to receive the total data amount transmitted by the ONU, and allocate the uplink bandwidths to the plurality of channels according to the total data amount send the total data amount.

14. An optical network unit, ONU, **characterized by** comprising:
the data transmission apparatus of claim 12;
a processor, which is configured to perform the modules of the data transmission apparatus.

15. An optical line terminal, OLT, **characterized by** comprising:
the data receiving apparatus of claim 13;
a processor, which is configured to perform the modules of the data receiving apparatus.

## Patentansprüche

1. Datenübertragungsverfahren, **dadurch gekennzeichnet, dass** es Folgendes umfasst:
Durchführen (S402), durch eine Optical Network Unit (optische Netzeinheit), ONU, einer Fragmentierung an zu übertragenden Daten, die auf einer Vielzahl von Kanälen, die mit der ONU verknüpft sind, übertragen werden müssen, um vielfache Stücke fragmentierter Daten zu erhalten;
Verteilen (S404), durch die ONU, der vielfachen Stücke fragmentierter Daten auf die Vielzahl von Kanälen gemäß Uplink-Bandbreiten, die der Vielzahl von Kanälen durch einen Optical Line Terminal (optischer Leitungsabschluss), OLT, zugeordnet sind, wobei die Uplink-Bandbreiten der Vielzahl von Kanälen durch den OLT gemäß einer gesamten Datenmenge der zu übertragenden Daten der ONU zugeordnet werden; und
Übertragen (S406), durch die ONU, der vielfachen Stücke fragmentierter Daten an den OLT durch die Vielzahl von Kanälen;
wobei, vor dem Verteilen (S404), durch die ONU, der vielfachen Stücke fragmentierter Daten auf die Vielzahl von Kanälen gemäß den Uplink-Bandbreiten, die der Vielzahl von Kanälen durch den OLT zugeordnet werden, das Verfahren ferner Folgendes umfasst:
Senden, durch die ONU, der gesamten Datenmenge der zu übertragenden Daten, die auf der Vielzahl von Kanälen übertragen werden müssen, an den OLT; und
Empfangen, durch die ONU, der Uplink-Bandbreiten, die der Vielzahl von Kanälen durch den OLT gemäß der gesamten Datenmenge zugeordnet werden.

2. Verfahren nach Anspruch 1, wobei die ONU die vielfachen Stücke fragmentierter Daten an die Vielzahl von Kanälen gemäß mindestens einem der Folgenden überträgt: Startzeitpunkt, zu dem die Datenübertragung auf jedem aus der Vielzahl von Kanälen gestartet wird; und eine numerische Reihenfolge der Vielzahl von Kanälen.

3. Verfahren nach Anspruch 2, wobei das Übertragen, durch die ONU, der vielfachen Stücke fragmentierter Daten an den OLT durch die Vielzahl von Kanälen Folgendes umfasst: unter der Bedingung, dass die Vielzahl von Kanälen Kanäle aufweist, die dieselbe Startzeit aufweisen, für die Kanäle, die dieselbe Startzeit aufweisen, Übertragen der vielfachen Stücke fragmentierter Daten gemäß der numerischen Reihenfolge der Kanäle, die dieselbe Startzeit aufweisen.

4. Verfahren nach einem der Ansprüche 1 bis 3, wobei jedes der vielfachen Stücke fragmentierter Daten eine laufende Nummer des jeweiligen der vielfachen Stücke fragmentierter Daten trägt, wobei die laufende Nummer des jeweiligen der vielfachen Stücke fragmentierter Daten verwendet wird, um eine Übertragungsreihenfolge des jeweiligen der vielfachen Stücke fragmentierter Daten unter den vielfachen Stücken fragmentierter Daten der zu übertragenden Daten anzugeben.

5. Verfahren nach Anspruch 4, wobei die laufende Nummer des jeweiligen der vielfachen Stücke fragmentierter Daten in einem Frame-Header des jeweiligen der vielfachen Stücke fragmentierter Daten getragen wird.

6. Verfahren nach einem der Ansprüche 1 bis 3, wobei das Verteilen, durch die ONU, der vielfachen Stücke fragmentierter Daten auf die Vielzahl von Kanälen gemäß den Uplink-Bandbreiten, die der Vielzahl von Kanälen durch den OLT zugeordnet werden, Folgendes umfasst:
Einteilen, durch die ONU, der vielfachen Stücke fragmentierter Daten in Gruppen fragmentierter Daten gemäß einer Anzahl der Vielzahl von Kanälen, wobei jede Gruppe fragmentierter Daten einem Kanal entspricht; und
Übertragen der jeweiligen Gruppe fragmentierter Daten an einen Kanal, der der jeweiligen Gruppe fragmentierter Daten entspricht.

7. Verfahren nach Anspruch 6, wobei für jede Gruppe fragmentierter Daten, die auf dem Kanal übertragen wird, der der jeweiligen Gruppe fragmentierter Daten entspricht, ein erstübertragenes Stück fragmentierter Daten in der jeweiligen Gruppe fragmentierter Daten eine laufende Nummer des erstübertragenen Stücks fragmentierter Daten trägt, wobei Stücke fragmentierter Daten in der jeweiligen Gruppe fragmentierter Daten gemäß einer Reihenfolge von laufenden Nummern der Stücke fragmentierter Daten übertragen werden, und eine laufende Nummer eines Stücks fragmentierter Daten in der jeweiligen Gruppe der fragmentierten Daten zum Angeben einer Übertragungsreihenfolge des Stücks fragmentierter Daten unter den vielfachen Stücken fragmentierter Daten der zu übertragenden Daten verwendet wird.

8. Datenempfangsverfahren, **dadurch gekennzeichnet, dass** es Folgendes umfasst:
Empfangen (S602), durch einen Optical Line Terminal, OLT, vielfacher Stücke fragmentierter Daten von zu übermittelnden Daten, die von einer Optical Network Unit, ONU, auf einer Vielzahl von Kanälen gemäß Uplink-Bandbreiten übertragen werden, wobei die Vielzahl von Kanälen mit der ONU verbunden sind; und
Wiederherstellen (S604), durch den OLT, der empfangenen Stücke fragmentierter Daten als die zu übertragenden Daten;
wobei vor dem Empfangen (S602), durch den OLT, der vielfachen Stücke fragmentierter Daten der zu übertragenden Daten, die von der ONU auf der Vielzahl von Kanälen gemäß den Uplink-Bandbreiten übertragen werden, das Verfahren ferner Folgendes umfasst:
Empfangen, durch den OLT, einer gesamten Datenmenge, die von der ONU übermittelt wird, und Zuordnen, durch den OLT, der Uplink-Bandbreiten der Vielzahl von Kanälen gemäß der gesamten Datenmenge.

9. Verfahren nach Anspruch 8, wobei jedes der vielfachen Stücke fragmentierter Daten eine laufende Nummer des jeweiligen der vielfachen Stücke fragmentierter Daten trägt, wobei die laufende Nummer des jeweiligen der vielfachen Stücke fragmentierter Daten zum Angeben einer Übertragungsreihenfolge des jeweiligen der vielfachen Stücke fragmentierter Daten unter den vielfachen Stücken fragmentierter Daten der zu übertragenden Daten verwendet wird;
wobei die laufende Nummer des jeweiligen der vielfachen Stücke fragmentierter Daten in einem Frame-Header des jeweiligen der vielfachen Stücke fragmentierter Daten getragen wird.

10. Verfahren nach Anspruch 8, wobei die vielfachen Stücke fragmentierter Daten in Gruppen fragmentierter Daten übertragen werden, wobei jede Gruppe fragmentierter Daten einem Kanal entspricht.

11. Verfahren nach Anspruch 10, wobei für jede Gruppe fragmentierter Daten, die auf dem Kanal übertragen wird, der der jeweiligen Gruppe fragmentierter Daten entspricht, ein erstübertragenes Stück fragmentierter Daten in der jeweiligen Gruppe fragmentierter Daten eine laufende Nummer des erstübertragenen Stücks fragmentierter Daten trägt, wobei Stücke fragmentierter Daten in der jeweiligen Gruppe fragmentierter Daten gemäß einer Reihenfolge von laufenden Nummern der Stücke fragmentierter Daten übertragen werden, und eine laufende Nummer eines Stücks fragmentierter Daten in der jeweiligen Gruppe der fragmentierten Daten zum Angeben einer Übertragungsreihenfolge des Stücks fragmentierter Daten unter den vielfachen Stücken fragmentierter Daten der zu übertragenden Daten verwendet wird.

12. Datenübertragungsvorrichtung, die an einer Optical Network Unit, ONU, eingesetzt wird, **dadurch gekennzeichnet, dass** sie Folgendes umfasst:
ein Fragmentierungsmodul (50), das so konfiguriert ist, dass es eine Fragmentierung an zu übertragenden Daten durchführt, die auf einer Vielzahl von Kanälen, die mit der ONU verbunden sind, um vielfache Stücke fragmentierter Daten zu erhalten;
ein Verteilungsmodul (52), das so konfiguriert ist, dass es die vielfachen Stücke fragmentierter Daten auf die Vielzahl von Kanälen gemäß Uplink-Bandbreiten, die der Vielzahl von Kanälen durch einen Optical Line Terminal, OLT, zugeordnet sind, verteilt, wobei die Uplink-Bandbreiten der Vielzahl von Kanälen durch den OLT gemäß einer gesamten Datenmenge der zu übertragenden Daten der ONU zugeordnet werden; und
ein Übertragungsmodul (54), das so konfiguriert ist, dass es die vielfachen Stücke fragmentierter Daten an den OLT über die Vielzahl von Kanälen überträgt;
wobei das Übertragungsmodul (54) ferner so konfiguriert ist, dass es die gesamte Datenmenge der zu übertragenden Daten, die auf der Vielzahl von Kanälen übertragen werden müssen, an den OLT sendet und die Uplink-Bandbreiten, die der Vielzahl von Kanälen durch den OLT gemäß der gesamten Datenmenge zugeordnet werden, empfängt.

13. Datenempfangsvorrichtung, die an einem Optical Line Terminal, OLT, eingesetzt wird, **dadurch gekennzeichnet, dass** sie Folgendes umfasst:
ein Empfangsmodul (70), das so konfiguriert ist, dass es vielfache Stücke fragmentierter Daten von zu übertragenden Daten, die von einer Optical Network Unit, ONU, auf einer Vielzahl von Kanälen gemäß Uplink-Bandbreiten übertragen werden, empfängt, wobei die Vielzahl von Kanälen mit der ONU verbunden sind; und
ein Wiederherstellungsmodul (72), das so konfiguriert ist, dass es die empfangenen Stücke fragmentierter Daten als die zu übertragenden Daten wiederherstellt;
wobei das Empfangsmodul (70) ferner so konfiguriert ist, dass es die gesamte Datenmenge, die von der ONU übertragen wird, empfängt und die Uplink-Bandbreiten der Vielzahl von Kanälen gemäß der gesamten Datenmenge zuordnet, die gesamte Datenmenge sendet.

14. Optical Network Unit, ONU, **dadurch gekennzeichnet, dass** sie Folgendes umfasst:
die Datenübertragungsvorrichtung nach Anspruch 12;
einen Prozessor, der so konfiguriert ist, dass er die Module der Datenübertragungsvorrichtung durchführt.

15. Optical Line Terminal, OLT, **dadurch gekennzeichnet, dass** er Folgendes umfasst::
die Datenempfangsvorrichtung nach Anspruch 13;
einen Prozessor, der so konfiguriert ist, dass er die Module der Datenempfangsvorrichtung durchführt.

## Revendications

1. Procédé de transmission de données, **caractérisé en ce qu'**il comprend :
la réalisation (S402), par une unité de réseau optique, ONU, d'une fragmentation sur des données à transmettre qui doivent être transmises sur une pluralité de canaux liés à l'ONU pour obtenir de multiples éléments de données fragmentées ;
la distribution (S404), par l'ONU, des multiples éléments de données fragmentées à la pluralité de canaux selon des largeurs de bande de liaison montante attribuées à la pluralité de canaux par un terminal de ligne optique, OLT, dans lequel les largeurs de bande de liaison montante sont attribuées à la pluralité de canaux par l'OLT selon une quantité totale de données des données à transmettre de l'ONU ; et
la transmission (S406), par l'ONU, des multiples éléments de données fragmentées à l'OLT à travers la pluralité de canaux ;
dans lequel, avant la distribution (S404), par l'ONU, des multiples éléments de données fragmentées à la pluralité de canaux selon les largeurs de bande de liaison montante attribuées à la pluralité de canaux par l'OLT, le procédé comprend en outre :
l'envoi, par l'ONU, de la quantité totale de données des données à transmettre qui doivent être transmises sur la pluralité de canaux à l'OLT ; et
la réception, par l'ONU, des largeurs de bande de liaison montante attribuées à la pluralité de canaux par l'OLT selon la quantité totale de données.

2. Procédé selon la revendication 1, dans lequel l'ONU transmet les multiples éléments de données fragmentées sur la pluralité de canaux selon au moins l'un des éléments suivants : heure de début à laquelle la transmission de données est lancée sur chacun de la pluralité de canaux ; et un ordre numérique de la pluralité de canaux.

3. Procédé selon la revendication 2, dans lequel la transmission, par l'ONU, des multiples éléments de données fragmentées à l'OLT à travers la pluralité de canaux comprend : à condition que la pluralité de canaux ait des canaux ayant la même heure de départ, pour les canaux ayant la même heure de départ, la transmission des multiples éléments de données fragmentées selon l'ordre numérique des canaux ayant la même heure de départ.

4. Procédé selon l'une quelconque des revendications 1 à 3, dans lequel chacun des multiples éléments de données fragmentées porte un numéro de série dudit chacun des multiples éléments de données fragmentées, dans lequel le numéro de série dudit chacun des multiples éléments de données fragmentées est utilisé pour indiquer un ordre de transmission dudit chacun des multiples éléments de données fragmentées parmi les multiples éléments de données fragmentées des données à transmettre.

5. Procédé selon la revendication 4, dans lequel le numéro de série dudit chacun des multiples éléments de données fragmentées est transporté dans un en-tête de trame dudit chacun des multiples éléments de données fragmentées.

6. Procédé selon l'une quelconque des revendications 1 à 3, dans lequel la distribution, par l'ONU, des multiples éléments de données fragmentées à la pluralité de canaux selon les largeurs de bande de liaison montante attribuées à la pluralité de canaux par l'OLT comprend :
la division, par l'ONU, des multiples éléments de données fragmentées en groupes de données fragmentées selon un certain nombre de la pluralité de canaux, dans lequel chaque groupe de données fragmentées correspond à un canal ; et
la transmission dudit chaque groupe de données fragmentées à un canal correspondant audit chaque groupe de données fragmentées.

7. Procédé selon la revendication 6, dans lequel, pour chaque groupe de données fragmentées transmis sur le canal correspondant audit chaque groupe de données fragmentées, un élément de données fragmentées transmis en premier dans ledit chaque groupe de données fragmentées porte un numéro de série de l'élément de données fragmentées transmis en premier, dans lequel des éléments de données fragmentées dans ledit chaque groupe de données fragmentées sont transmis selon un ordre de numéros de série des éléments de données fragmentées, et un numéro de série d'un élément de données fragmentées dans ledit chaque groupe de données fragmentées est utilisé pour indiquer un ordre de transmission de l'élément de données fragmentées parmi les multiples éléments de données fragmentées des données à transmettre.

8. Procédé de réception de données, **caractérisé en ce qu'**il comprend :
la réception (S602), par un terminal de ligne optique, OLT, de multiples éléments de données fragmentées de données à transmettre transmis par une unité de réseau optique, ONU, sur une pluralité de canaux selon des largeurs de bande de liaison montante, dans lequel la pluralité de canaux est liée à l'ONU ; et
la restauration (S604), par l'OLT, des éléments de données fragmentées reçus en tant que données à transmettre ;
dans lequel, avant la réception (S602), par l'OLT, des multiples éléments de données fragmentées des données à transmettre transmis par l'ONU sur la pluralité de canaux selon les largeurs de bande de liaison montante, le procédé comprend en outre :
la réception, par l'OLT, d'une quantité totale de données transmise par l'ONU, et l'attribution, par l'OLT, des largeurs de bande de liaison montante à la pluralité de canaux en fonction de la quantité totale de données.

9. Procédé selon la revendication 8, dans lequel chacun des multiples éléments de données fragmentées porte un numéro de série dudit chacun des multiples éléments de données fragmentées, dans lequel le numéro de série dudit chacun des multiples éléments de données fragmentées est utilisé pour indiquer un ordre de transmission dudit chacun des multiples éléments de données fragmentées parmi les multiples éléments de données fragmentées des données à transmettre ;
dans lequel le numéro de série dudit chacun des multiples éléments de données fragmentées est transporté dans un en-tête de trame dudit chacun des multiples éléments de données fragmentées.

10. Procédé selon la revendication 8, dans lequel les multiples éléments de données fragmentées sont transmis en groupes de données fragmentées, dans lequel chaque groupe de données fragmentées correspond à un canal.

11. Procédé selon la revendication 10, dans lequel, pour chaque groupe de données fragmentées transmis sur le canal correspondant audit chaque groupe de données fragmentées, un élément de données fragmentées transmis en premier dans ledit chaque groupe de données fragmentées porte un numéro de série de l'élément de données fragmentées transmis en premier, dans lequel des éléments de données fragmentées dans ledit chaque groupe de données fragmentées sont transmis selon un ordre de numéros de série des éléments de données fragmentées, et un numéro de série d'un élément de données fragmentées dans ledit chaque groupe de données fragmentées est utilisé pour indiquer un ordre de transmission de l'élément de données fragmentées parmi les multiples éléments de données fragmentées des données à transmettre.

12. Appareil de transmission de données, appliqué à une unité de réseau optique, ONU, **caractérisé en ce qu'**il comprend :
un module de fragmentation (50), qui est configuré pour effectuer une fragmentation sur des données à transmettre qui doivent être transmises sur une pluralité de canaux liés à l'ONU pour obtenir de multiples éléments de données fragmentées ;
un module de distribution (52), qui est configuré pour distribuer les multiples éléments de données fragmentées à la pluralité de canaux selon des largeurs de bande de liaison montante attribuées à la pluralité de canaux par un terminal de ligne optique, OLT, dans lequel les largeurs de bande de liaison montante sont attribuées à la pluralité de canaux par l'OLT selon une quantité totale de données des données à transmettre de l'ONU ; et
un module de transmission (54), qui est configuré pour transmettre les multiples éléments de données fragmentées à l'OLT à travers la pluralité de canaux ;
dans lequel le module de transmission (54) est en outre configuré pour envoyer la quantité totale de données des données à transmettre qui doivent être transmises sur la pluralité de canaux à l'OLT, et recevoir les bandes passantes de liaison montante attribuées à la pluralité de canaux par l'OLT en fonction de la quantité totale de données.

13. Appareil de réception de données, appliqué à un terminal de ligne optique, OLT, **caractérisé en ce qu'**il comprend :
un module de réception (70), qui est configuré pour recevoir plusieurs éléments de données fragmentées de données à transmettre transmises par une unité de réseau optique, ONU, sur une pluralité de canaux selon des largeurs de bande de liaison montante, dans lequel la pluralité de canaux est liée à l'ONU ; et
un module de restauration (72), qui est configuré pour restaurer les éléments de données fragmentées reçus en tant que données à transmettre ;
dans lequel le module de réception (70) est en outre configuré pour recevoir la quantité totale de données transmise par l'ONU, et attribuer les largeurs de bande de liaison montante à la pluralité de canaux en fonction de la quantité totale de données envoyée à la quantité totale de données.

14. Unité de réseau optique, ONU, **caractérisée en ce qu'**elle comprend :
l'appareil de transmission de données selon la revendication 12 ;
un processeur, qui est configuré pour exécuter les modules de l'appareil de transmission de données.

15. Terminal de ligne optique, OLT, **caractérisé en ce qu'**il comprend :
l'appareil de réception de données selon la revendication 13 ;
un processeur, qui est configuré pour exécuter les modules de l'appareil de réception de données.
